# EUROPÄISCHE PATENTSCHRIFT

(11) **EP 3 289 198 B1**
(45) Veröffentlichungstag und Bekanntmachung des Hinweises auf die Patenterteilung: **31.03.2021**
(21) Anmeldenummer: 16721385.9
(22) Anmeldetag: 27.04.2016
(51) Int. Cl.: F02B 37/10, F04D 17/10, F04D 27/02, F04D 29/42, F04D 29/44

(54) **TURBOLADER MIT VERDICHTERANORDNUNG**
TURBOCHARGER WITH COMPRESSOR
TURBOCOMPRESSEUR AVEC COMPRESSEUR

(30) Priorität: 29.04.2015 DE 102015106596
(43) Veröffentlichungstag der Anmeldung: 07.03.2018
(73) Patentinhaber: ABB Schweiz AG, 5400 Baden (CH)
(72) Erfinder: RUSCH, Daniel, 5430 Wettingen (CH); MUNDINGER, Gerd, 5430 Wettingen (CH)
(74) Vertreter: Zimmermann & Partner Patentanwälte mbB
(86) Internationale Anmeldenummer: PCT/EP2016/059390
(87) Internationale Veröffentlichungsnummer: WO 2016/174078

(56) Entgegenhaltungen:
- DE-A1- 1 922 386
- JP-U- S55 180 930
- US-A1- 2006 130 479

## Beschreibung

Die vorliegende Erfindung betrifft einen Turbolader für einen Verbrennungsmotor umfassend eine Verdichteranordnung. Der Anwendungsbereich der vorliegenden Erfindung erstreckt sich auf Verdichter mit einer rein radialen oder diagonalen Abströmung des Verdichterlaufrades.

### STAND DER TECHNIK

Um bei turboaufgeladenen Verbrennungsmotoren das Lastaufschaltverhalten zu verbessern, werden im und nach dem Turboladerverdichter Lufteinblasesysteme eingesetzt. Ein solches bekanntes Lufteinblasesystem besteht aus sogenannten Lufthilfsantrieben. Dabei ist dem Fachmann bekannt, dass komprimierte Luft im Laufradbereich des Verdichters und in Drehrichtung eingeblasen wird. Dadurch werden die Verdichterradschaufeln angetrieben und die Turboladerdrehzahl sowie der Massenstrom und das Ladedruckverhältnis nehmen zu. Ein anderes, dem Fachmann bekanntes, Lufteinblasesystem ist unter der Bezeichnung Direct Air Injection System (DAI-System) bekannt. Dabei wird Pressluft über eine sogenannte Lanze nach dem Vedichteraustrittsflansch koaxial ins Rohr eingedüst. Das System arbeit dabei wie eine Strahlpumpe, das heisst, es reduziert den Verdichteraustrittsdruck, so das der Turbolader schnelle eine höhere Drehzahl erreicht. Zugleich wird damit der Massenstrom durch den Motor erhöht, was eine schnellere Lastaufschaltung ermöglicht. Aus dem Stand der Technik bekannte DAI-Systeme mit einer Lufteinblasevorrichtung sind dabei in der Regel derart ausgebildet, dass im oder nach dem Turboladerverdichter eine Düse in den Strömungskanal des Diffusors hineinragt. Andere bekannte DAI-Systeme sehen die Verwendung von sogenannten Ringkammeranordnungen im Strömungskanal vor. Dies hat jedoch folgende Nachteile: Zum einen kann durch die in den Strömungskanal hineinragende Düse während des Betriebs zu Strömungsverlusten kommen. Auch steigt aufgrund der Strömung im Strömungskanal das Risiko eines Düsenbruchs, wenn die Düse in den Strömungskanal hineinragt. Bei der Verwendung einer Ringkammeranordnung im Strömungskanal wird ein zusätzliches Bauteil benötigt, was Zusatzkosten verursacht.

Weiter ist eine gattungsgemässe Vorrichtung aus DE 1922386 A1 bekannt.

### ZUSAMMENFASSUNG DER ERFINDUNG

Der vorliegenden Erfindung liegt die objektive technische Aufgabe zugrunde, eine Verdichteranordnung eines Turboladers für einen Verbrennungsmotor mit einem Einblasesystem derart weiterzubilden, dass eine optimierte Eindüsung von Fluid in den Strömungskanal der Verdichteranordnung gewährleistet wird und zugleich Strömungsverluste im Strömungskanal der Verdichteranordnung reduziert werden, wodurch das Lastaufschaltverhalten von turboaufgeladenen Verbrennungsmotoren verbessert wird.

Die Aufgabe wird durch einen Turbolader gemäß dem Anspruch 1 gelöst. Der Turbolader umfasst eine Verdichteranordnung, welche ein Spiralgehäuse mit einem Strömungskanal und einem Kegeldiffusor umfasst, welcher ausgebildet ist, ein von ausserhalb der Verdichteranordnung ansaugbares erstes Fluid zu befördern. Die Verdichteranordnung umfasst weiterhin einen Verdichteraustrittsflansch, welcher über den Strömungskanal mit dem Spiralgehäuse fluidisch verbunden ist, eine Einblasevorrichtung, wobei die Einblasevorrichtung ausgebildet ist, Luft von ausserhalb der Verdichteranordnung in den Strömungskanal einzuleiten, wobei die Einblasevorrichtung ausserhalb des Strömungskanals des Spiralgehäuses angeordnet ist. Die Einblasevorrichtung ist so ausgebildet, die Luft im Kegeldiffusor einzudüsen.

Durch die Anordnung der Einblasevorrichtung ausserhalb des Strömungskanals des Spiralgehäuses ergeben sich folgende Vorteile: die von der Einblasevorrichtung im Kegeldiffusor eingedüste Luft beeinflusst die Hauptströmung im Strömungskanal positiv, das heisst, die eingedüste Luft interagiert mit dem ersten Fluid der Hauptströmung im Strömungskanal und unterstützt beziehungsweise verstärkt eine Drall- oder Spiralströmung der Hauptströmung. Dies führt in vorteilhafterweise Weise zu einer Druckreduktion im Kegeldiffusor der Verdichteranordnung.

Ein weiterer Vorteil besteht darin, dass eine Düse zur Eindüsung von Fluid in den Strömungskanal der Verdichteranordnung ohne zusätzliche Bauteile realisiert werden kann. Ausserdem wird durch die erfindungsgemässe Einblasevorrichtung, welche mit geringeren Zusatzkosten realisierbar ist, die Strömung im Strömungskanal nicht beeinträchtigt, was zu einer höheren Effizienz bei Betreiben der Verdichteranordnung führt.

### AUSFÜHRUNGSFORMEN DER ERFINDUNG

Bei einer Ausführungsform der vorliegenden Erfindung ist die Einblasevorrichtung zumindest teilweise im Spiralgehäuse eingearbeitet. Die Einblasevorrichtung umfasst mindestens eine Öffnung zum Strömungskanal, damit Luft von ausserhalb der Verdichteranordnung durch die Einblasevorrichtung in den Strömungskanal einleitbar ist.

Bei einer bevorzugten Ausführungsform der vorliegenden Erfindung umfasst die Einblasevorrichtung einen Fluidkanal.

Bei einer bevorzugten Ausführungsform der vorliegenden Erfindung ist die Einblasevorrichtung an einer Aussenwand des Spiralgehäuses angebracht, damit Luft von ausserhalb der Verdichteranordnung über die Einblasevorrichtung durch eine Öffnung im Spiralgehäuse in den Strömungskanal einleitbar ist.

Bei einer bevorzugten Ausführungsform der vorliegenden Erfindung ist die Aussenwand des Spiralgehäuses, an welcher die Einblasevorrichtung angebracht ist, ein Teil einer Aussenwand des Kegeliffusors.

Bei einer bevorzugten Ausführungsform der vorliegenden Erfindung umfasst der Verdichteraustrittsflansch zumindest teilweise eine Einblasevorrichtung, damit Luft von ausserhalb der Verdichteranordnung durch die Einblasevorrichtung in den Strömungskanal des Spiralgehäuses einleitbar ist.

Bei einer bevorzugten Ausführungsform der vorliegenden Erfindung umfasst die Einblasevorrichtung einen Fluidkanal im Verdichteraustrittsflansch, wobei der Fluidkanal eine erste Öffnung und eine zweite Öffnung umfasst, wobei über die erste Öffnung des Fluidkanals Luft von ausserhalb der Verdichteranordnung in den Fluidkanal einleitbar ist, und wobei die zweite Öffnung des Fluidkanals den Fluidkanal mit dem Strömungskanal des Spiralgehäuses fluidisch verbindet, damit die eingeleitete Luft in den Strömungskanal einleitbar ist.

Bei einer bevorzugten Ausführungsform der vorliegenden Erfindung wird ein Abschnitt des Fluidkanals gebildet von einem Anschlussstück, welches mit dem Verdichteraustrittsflansch verbindbar ist.

Bei einer bevorzugten Ausführungsform der vorliegenden Erfindung umfasst die Einblasevorrichtung ein Reservoir zur Speicherung der Luft und zur gleichförmigen Verteilung der Luft über dem Umfang des Strömungskanals, wobei das Reservoir ein Teil des Fluidkanals umfasst.

Bei einer bevorzugten Ausführungsform der vorliegenden Erfindung umfasst die Einblasevorrichtung ein Anschlusselement, damit Luft von ausserhalb der Verdichteranordnung über eine in das Anschlusselement einsetzbares und eine als Düse ausgebildetes Einblaselement in die Einblasevorrichtung einleitbar ist.

Bei einer bevorzugten Ausführungsform der vorliegenden Erfindung ist die Einblasevorrichtung düsenförmig ausgebildet.

Gemäß der vorliegenden Erfindung ist der Kegeldiffusor mit dem übrigen Spiralgehäuse fluidisch über den Strömungskanal verbunden.

Bei einer bevorzugten Ausführungsform der vorliegenden Erfindung ist der Kegeldiffusor über den Strömungskanal mit dem Verdichteraustrittsflansch fluidisch verbunden.

### KURZE BESCHREIBUNG DER ZEICHNUNGEN

Nachfolgend wird die Erfindung anhand von Ausführungsbeispielen beschrieben, die anhand von Zeichnungen näher erläutert werden. Hierbei zeigen:
Fig. 1 zeigt eine Verdichteranordnung mit Einblasevorrichtung in Schnittansicht gemäss einer ersten Ausführungsform der vorliegenden Erfindung;
Fig. 2 zeigt einen Ausschnitt eines Verdichteraustrittsflanschs mit integrierter Einblasevorrichtung gemäss einer zweiten Ausführungsform der vorliegenden Erfindung;
Fig. 3 zeigt einen Ausschnitt eines Verdichteraustrittsflansches mit Einblasevorrichtung gemäss einer dritten Ausführungsform der vorliegenden Erfindung.
Fig. 4 zeigt eine Aussenansicht eines Abgasturboladers mit einem Filterschalldämpfer, einem Verdichteraustrittsgehäuse (Spiralgehäuse), einem Lagergehäuse, einem Gasaustrittsgehäuse und einem Gaseintrittsgehäuse.

In der nachfolgenden Beschreibung werden für gleiche und gleich wirkende Teile identische Bezugszeichen verwendet.

### AUSFÜHRLICHE BESCHREIBUNG DER ZEICHNUNGEN

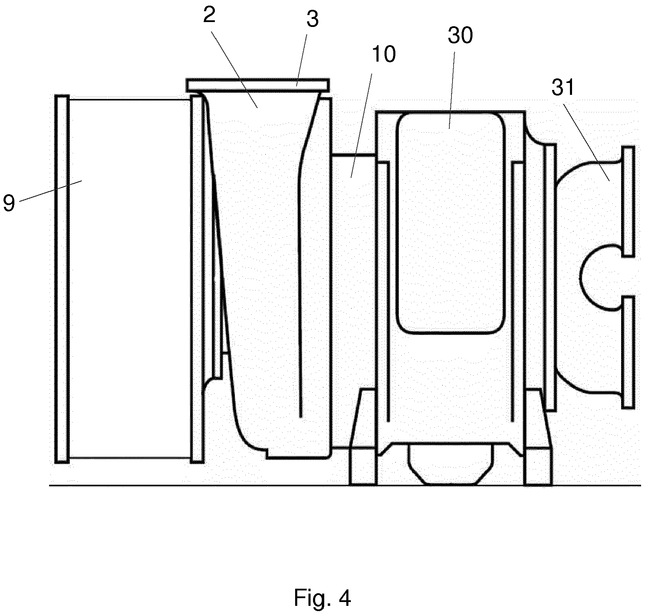

Fig. 4 zeigt einen Abgasturbolader mit einer Axialturbine und einem Radialverdichter. Die in der Aussenansicht zu sehenden Gehäuseteile von links nach rechts sind die folgenden: Der Filterschalldämpfer 9 befindet sich auf der Lufteintrittsseite des Verdichters. Die über den Filterschalldämpfer angesaugte Luft wird durch eine zentrale Öffnung im Filterschalldämpfer ins angrenzende Verdichtergehäuse, mit dem Spiralgehäuse 2 geführt. Am oberen Rand des Spiralgehäuses ist der Verdichteraustrittsflansch 3 angedeutet, welcher zur Befestigungs eines Rohres vorgesehen ist, mit welchem die verdichtete Luft einer Brennkraftmaschine zugeführt wird. Der Verdichter wird angetrieben über eine im Lagergehäuse 10 drehbar gelagerte Welle des Abgasturboladers. Angetrieben wird die Welle durch ein Turbinenrad, welches im Turbinengehäuse angeordnet ist. Das Turbinengehäuse umfasst eine Gasaustrittsgehäuse 30 sowie ein Gaseintrittsgehäuse 31, welches in der dargestellten Ausführung zweiflutig ausgebildet ist.

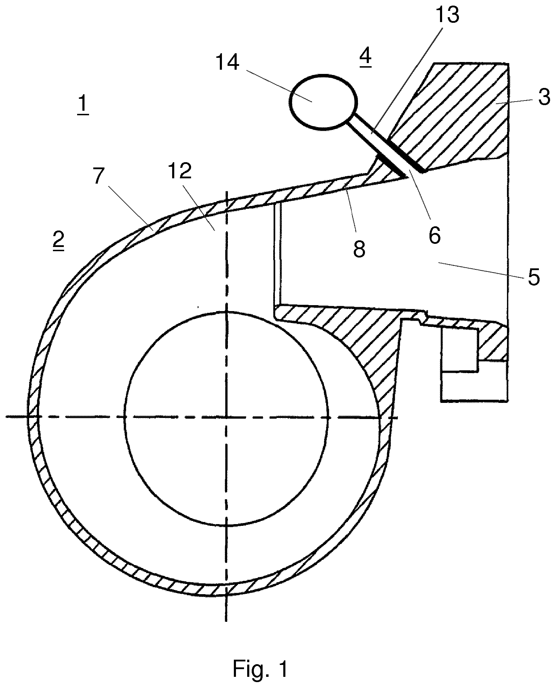

Fig. 1 zeigt in einem Schnitt senkrecht zur Wellenachse des Abgasturboladers durch das Spiralgehäuse einer Verdichteranordnung. Die Verdichteranordnung 1 umfasst das Spiralgehäuse 2 mit einem Strömungskanal 12, wobei der Strömungskanal 12 ausgebildet ist, ein von ausserhalb der Verdichteranordnung 1 ansaugbares erstes Fluid wie zum Beispiel Luft zu befördern. Die Verdichteranordnung 1 umfasst weiterhin einen Verdichteraustrittsflansch 3, welcher über den Strömungskanal 12 mit dem Spiralgehäuse 2 fluidisch verbunden ist. Die Verdichteranordnung 1 umfasst des Weiteren einen Kegeldiffusor 5.

Der Kegeldiffusor 5 ist über den Strömungskanal 12 mit dem Verdichteraustrittsflansch 3 fluidisch verbunden. Der Kegeldiffusor 5 ist jedoch auch über den Strömungskanal 12 fluidisch mit dem Spiralgehäuse 2 verbunden. Die Einblasevorrichtung 4 ist ausgebildet, Luft von ausserhalb der Verdichteranordnung 1 in den Strömungskanal 12 einzuleiten. Die Einblasevorrichtung 4 ist in der Figur 1 ausserhalb des Strömungskanals 12 des Spiralgehäuses 2 angeordnet. Die Einblasevorrichtung 4 umfasst ein Anschlusselement 14 für die Zuleitung der Luft und einen Fluidkanal 13, durch den die von ausserhalb der Verdichteranordnung 1 einleitbare Luft strömt. Der Fluidkanal 13 ist über eine Öffnung 6 im Spiralgehäuse mit dem Strömungskanal 12 verbunden. Die über den Fluidkanal 13 eingedüste Luft interagiert also mit dem ersten Fluid im Strömungskanal 12 und kann die Drallströmung des ersten Fluids im Strömungskanal 12 verstärken. Die Einblasevorrichtung 4 ist in der Figur 1 teilweise in das Spiralgehäuse 2 eingearbeitet. Im Detail ist die Einblasevorrichtung 4 in der Figur 1 an einer Aussenwand 7 des Spiralgehäuses 2 angebracht, damit Luft von ausserhalb der Verdichteranordnung 1 über die Einblasevorrichtung 4 durch die Öffnung 6 im Spiralgehäuse 2 in den Strömungskanal 12 strömen kann. In der Fig. 1 bildet die Aussenwand 7 des Spiralgehäuses 2, an welcher die Einblasevorrichtung 4 angebracht ist, einen Teil einer Aussenwand 8 des Kegeldiffusors 5. Die Verdichteranordung gemäss der Ausführungsform der Figur 1 ist dabei Bestandteil eines Turboladers (nicht dargestellt).

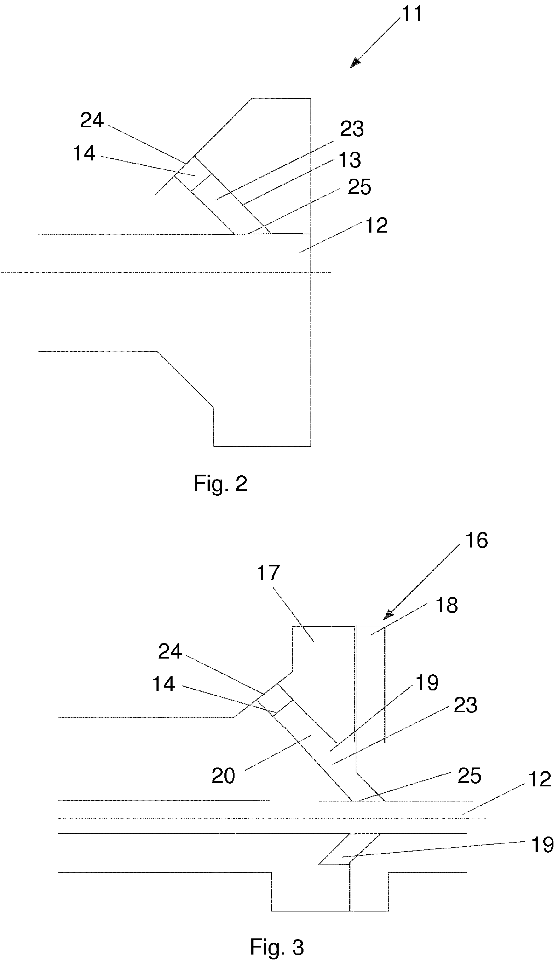

Fig. 2 zeigt einen Ausschnitt eines Verdichteraustrittsflansches 11 mit einer in den Verdichteraustrittsflansch 11 integrierten Einblasevorrichtung. Alternativ kann die Einblasevorrichtung auch nur teilweise in den Verdichteraustrittsflansch 11 eingearbeitet sein (nicht dargestellt), damit Luft von ausserhalb der Verdichteranordnung 1 durch die Einblasevorrichtung in den Strömungskanal 12 des Spiralgehäuses 2 einleitbar ist. Die Einblasevorrichtung umfasst einen Fluidkanal 23 im Verdichteraustrittsflansch 11, wobei der Fluidkanal 23 eine erste Öffnung 24 und eine zweite Öffnung 25 umfasst, wobei über die erste Öffnung 24 des Fluidkanals 23 Luft von ausserhalb der Verdichteranordnung 1 in den Fluidkanal 23 einleitbar ist, und wobei die zweite Öffnung 25 des Fluidkanals 23 den Fluidkanal 23 mit dem Strömungskanal 12 des Spiralgehäuses 2 fluidisch verbindet, damit die eingeleitete Luft in den Strömungskanal 12 einleitbar ist. In der Figur 2 umfasst die Einblasevorrichtung ein Anschlusselement 14. In das Anschlusselement 14 kann ein als Düse ausgebildetes Einblaselement in die Einblasevorrichtung 4 eingesetzt werden, damit das zweite Fluid von ausserhalb der Verdichteranordnung 1 in die Einblasevorrichtung 4 einleitbar ist. Die Einblasevorrichtung kann dabei düsenförmig ausgebildet sein.

Fig. 3 zeigt einen Ausschnitt eines Verdichteraustrittsflansches 16 mit Einblasevorrichtung 20 einer Verdichteranordnung 1. Die Einblasevorrichtung 20 umfasst einen Fluidkanal 23 im Verdichteraustrittsflansch 17, wobei der Fluidkanal 23 eine erste Öffnung 24 und eine zweite Öffnung 25 umfasst, wobei über die erste Öffnung 24 des Fluidkanals 23 Luft von ausserhalb der Verdichteranordnung 1 in den Fluidkanal 23 einleitbar ist, und wobei die zweite Öffnung 25 des Fluidkanals 23 den Fluidkanal 23 mit dem Strömungskanal 12 des Spiralgehäuses 2 fluidisch verbindet, damit die eingeleitete Luft in den Strömungskanal 12 einleitbar ist. Im Gegensatz zur Figur 2 wird in der Ausführungsform der Figur 3 ein Abschnitt des Fluidkanals 23 gebildet von einem Anschlussstück 18, welches mit dem Verdichteraustrittsflansch 16 verbindbar ist. Dieses Anschlussstück 18 kann dabei motorseitig ausgelegt sein. Auch in der Figur 3 umfasst die Einblasevorrichtung 20 ein Anschlusselement 14. Weiterhin umfasst die Einblasevorrichtung 20 ein Reservoir 19 zur Speicherung der Luft und zur gleichförmigen Verteilung der Luft über dem Umfang des Strömungskanals 12, wobei das Reservoir 19 ein Teil des Fluidkanals 23 umfasst. Auch in der Ausführungsform der Figur 3 kann die Einblasevorrichtung 20 düsenförmig ausgebildet sein.

In den Ausführungsformen der Figuren 1 bis 3 kann die Einblasevorrichtung 4, 20 jeweils derart angeordnet sein, damit die durch die Einblasevorrichtung 4, 20 in den Strömungskanal 12 einleitbare Luft optimalerweise einer Drallströmung des ersten Fluids im Strömungskanal 12 der Verdichteranordnung 1 folgt, um die Drallströmung des ersten Fluids zu verstärken.

Zudem kann in den Ausführungsformen der Figuren 1 bis 3 der Fluidkanal 13, 23 die Kontur für die Düse bilden.

### Bezugszeichenliste

1 Verdichteranordnung mit Kegeldiffusor
2 Spiralgehäuse der Verdichteranordnung (Verdichteraustrittsgehäuse)
3 Verdichteraustrittsflansch
4 Einblasevorrichtung
5 Kegeldiffusor
6 Öffnung im Spiralgehäuse
7 Aussenwand des Spiralgehäuses
8 Aussenwand des Kegeldiffusors
9 Filterschalldämpfer am Eingang des Verdichters
10 Lagergehäuse zur Lagerung der Welle des Abgasturboladers
11 Verdichteraustrittsflansch
12 Strömungskanal
13 Fluidkanal der Einblasevorrichtung
14 Anschlusselement für Fluidzuleitung
16 Verdichteraustrittsflansch mit Anschlussstück
17 Verdichteraustrittsflansch
18 Anschlussstück
19 Reservoir
20 Einblasevorrichtung
23 Fluidkanal der Einblasevorrichtung
24 erste Öffnung der Einblasevorrichtung
25 zweite Öffnung der Einblasevorrichtung
30 Gasaustrittsgehäuse der Turbine des Abgasturboladers
31 Gaseintrittsgehäuse der Turbine des Abgasturboladers

## Patentansprüche

1. Turbolader für einen Verbrennungsmotor umfassend eine Verdichteranordnung (1), die Verdichteranordnung (1) umfasst:
ein Spiralgehäuse (2) mit
einem Strömungskanal (12), welcher ausgebildet ist, ein von ausserhalb der Verdichteranordnung (1) ansaugbares erstes Fluid zu befördern und einem Verdichteraustritt zuzuführen; und
einem Kegeldiffusor ,
einen am Spiralgehäuse angeordneten, an den Kegeldiffusor angrenzenden Verdichteraustrittsflansch (3, 11, 16),
eine Einblasevorrichtung (4, 20) zur Verbesserung des Lastaufschaltverhaltens eines, mit dem Turbolader verbindbaren, Verbrennungsmotors, wobei
die Einblasevorrichtung (4, 20) ausgebildet ist, Luft von ausserhalb der Verdichteranordnung (1) in den Strömungskanal (12) einzuleiten, wobei
die Einblasevorrichtung (4, 20) ausserhalb des Strömungskanals (12) des Spiralgehäuses (2) angeordnet ist, **dadurch gekennzeichnet, dass**
die Einblasevorrichtung (4,20) so ausgebildet ist, die Luft im Kegeldiffusor (5) einzudüsen.

2. Turbolader nach Anspruch 1, **dadurch gekennzeichnet, dass** die Einblasevorrichtung (4, 20) zumindest teilweise im Spiralgehäuse (2) eingearbeitet ist, und dass die Einblasevorrichtung (4) mindestens eine Öffnung (6) zum Strömungskanal (12) umfasst, damit Luft von ausserhalb der Verdichteranordnung (1) durch die Einblasevorrichtung (4) in den Strömungskanal (12) einleitbar ist.

3. Turbolader nach Anspruch 1, **dadurch gekennzeichnet, dass** die Einblasevorrichtung (4) einen Fluidkanal (13) umfasst.

4. Turbolader nach Anspruch 1, **dadurch gekennzeichnet, dass** die Einblasevorrichtung (4, 20) an einer Aussenwand (7) des Spiralgehäuses (2) angebracht ist, damit Luft von ausserhalb der Verdichteranordnung (1) über die Einblasevorrichtung (4) durch eine Öffnung (6) im Spiralgehäuse (2) in den Strömungskanal (12) einleitbar ist.

5. Turbolader nach Anspruch 4, **dadurch gekennzeichnet, dass** die Aussenwand (7) des Spiralgehäuses (2), an welcher die Einblasevorrichtung (4) angebracht ist, einen Teil einer Aussenwand (8) des Kegeldiffusors (5) bildet.

6. Turbolader nach Anspruch 1, **dadurch gekennzeichnet, dass** der Verdichteraustrittsflansch (11) zumindest teilweise die Einblasevorrichtung (4, 20) umfasst, damit Luft von ausserhalb der Verdichteranordnung (1) durch die Einblasevorrichtung in den Strömungskanal (12) des Spiralgehäuses (2) einleitbar ist.

7. Turbolader nach Anspruch 6, **dadurch gekennzeichnet, dass** die Einblasevorrichtung (20) einen Fluidkanal (23) im Verdichteraustrittsflansch (11) umfasst, wobei der Fluidkanal (23) eine erste Öffnung (24) und eine zweite Öffnung (25) umfasst, wobei über die erste Öffnung (24) des Fluidkanals (23) Luft von ausserhalb der Verdichteranordnung (1) in den Fluidkanal (23) einleitbar ist, und wobei die zweite Öffnung (25) des Fluidkanals (23) den Fluidkanal (23) mit dem Strömungskanal (12) des Spiralgehäuses (2) fluidisch verbindet, damit die Luft in den Strömungskanal (12) einleitbar ist.

8. Turbolader nach Anspruch 7, **dadurch gekennzeichnet, dass** ein Abschnitt des Fluidkanals (23) gebildet wird von einem Anschlussstück (18), welches mit dem Verdichteraustrittsflansch (16) verbindbar ist.

9. Turbolader nach einem der vorangegangenen Ansprüche, **dadurch gekennzeichnet, dass** die Einblasevorrichtung (4, 20) ein Reservoir (19) zur Speicherung der Luft und zur gleichförmigen Verteilung der Luft über dem Umfang des Strömungskanals (12) aufweist, wobei das Reservoir (19) ein Teil des Fluidkanals (13, 23) umfasst.

10. Turbolader nach einem der vorangegangenen Ansprüche, **dadurch gekennzeichnet, dass** die Einblasevorrichtung (4, 20) ein Anschlusselement (14) umfasst, damit Luft von ausserhalb der Verdichteranordnung (1) über ein in das Anschlusselement (14) einsetzbares und ein als Düse ausgebildetes Einblaselement in die Einblasevorrichtung (4) einleitbar ist.

11. Turbolader nach einem der vorangegangenen Ansprüche, **dadurch gekennzeichnet, dass** die Einblasevorrichtung (4, 20) düsenförmig ausgebildet ist.

## Claims

1. Turbocharger for an internal combustion engine, comprising a compressor assembly (1), the compressor assembly (1) comprises:
a spiral housing (2) with
a flow channel (12) which is designed to convey a first fluid which can be sucked up from outside the compressor assembly (1) and to feed said fluid to a compressor outlet; and
a conical diffuser,
a compressor outlet flange (3, 11, 16) which is arranged on the spiral housing and is adjacent to the conical diffuser,
an injection device (4, 20) for improving the load response behavior of an internal combustion engine which can be connected to the turbocharger, wherein
the injection device (4, 20) is designed to introduce air from outside the compressor assembly (1) into the flow channel (12), wherein
the injection device (4, 20) is arranged outside the flow channel (12) of the spiral housing (2), **characterized in that**
the injection device (4, 20) is designed so as to inject the air in the conical diffuser (5).

2. Turbocharger according to Claim 1, **characterized in that** the injection device (4, 20) is at least partially incorporated in the spiral housing (2), and **in that** the injection device (4) comprises at least one opening (6) to the flow channel (12) so that air can be introduced from outside the compressor assembly (1) into the flow channel (12) by the injection device (4).

3. Turbocharger according to Claim 1, **characterized in that** the injection device (4) comprises a fluid channel (13) .

4. Turbocharger according to Claim 1, **characterized in that** the injection device (4, 20) is attached to an outer wall (7) of the spiral housing (2) so that air can be introduced from outside the compressor assembly (1) via the injection device (4) into the flow channel (12) through an opening (6) in the spiral housing (2).

5. Turbocharger according to Claim 4, **characterized in that** the outer wall (7) of the spiral housing (2), to which outer wall the injection device (4) is attached, forms part of an outer wall (8) of the conical diffuser (5) .

6. Turbocharger according to Claim 1, **characterized in that** the compressor outlet flange (11) at least partially comprises the injection device (4, 20) so that air can be introduced from outside the compressor assembly (1) by the injection device into the flow channel (12) of the spiral housing (2).

7. Turbocharger according to Claim 6, **characterized in that** the injection device (20) comprises a fluid channel (23) in the compressor outlet flange (11), wherein the fluid channel (23) comprises a first opening (24) and a second opening (25), wherein air can be introduced from outside the compressor assembly (1) into the fluid channel (23) via the first opening (24) of the fluid channel (23), and wherein the second opening (25) of the fluid channel (23) fluidically connects the fluid channel (23) to the flow channel (12) of the spiral housing (2) so that the air can be introduced into the flow channel (12) .

8. Turbocharger according to Claim 7, **characterized in that** a portion of the fluid channel (23) is formed by a connection piece (18) which is connectable to the compressor outlet flange (16).

9. Turbocharger according to one of the preceding claims, **characterized in that** the injection device (4, 20) has a reservoir (19) for storing the air and for the uniform distribution of the air over the circumference of the flow channel (12), wherein the reservoir (19) comprises part of the fluid channel (13, 23).

10. Turbocharger according to one of the preceding claims, **characterized in that** the injection device (4, 20) comprises a connection element (14) so that air can be introduced from outside the compressor assembly (1) into the injection device (4) via an injection element which is insertable into the connection element (14) and is designed as a nozzle.

11. Turbocharger according to one of the preceding claims, **characterized in that** the injection device (4, 20) is of nozzle-shaped design.

## Revendications

1. Turbocompresseur pour un moteur à combustion interne, comprenant un ensemble de compresseur (1), l'ensemble de compresseur (1) comprenant :
un carter en spirale (2) doté d'un canal d'écoulement (12) qui est réalisé pour transporter un premier fluide pouvant être aspiré de l'extérieur de l'ensemble de compresseur (1) et pour l'amener à une sortie de compresseur ; et
un diffuseur conique,
une bride de sortie de compresseur (3, 11, 16) disposée sur le carter en spirale et adjacente au diffuseur conique,
un dispositif d'injection (4, 20) pour améliorer le comportement sous application de charge d'un moteur à combustion interne pouvant être relié au turbocompresseur,
le dispositif d'injection (4, 20) étant réalisé pour introduire de l'air de l'extérieur de l'ensemble de compresseur (1) dans le canal d'écoulement (12),
le dispositif d'injection (4, 20) étant disposé à l'extérieur du canal d'écoulement (12) du carter en spirale (2),
**caractérisé en ce que** le dispositif d'injection (4, 20) est réalisé de façon à injecter l'air dans le diffuseur conique (5).

2. Turbocompresseur selon la revendication 1, **caractérisé en ce que** le dispositif d'injection (4, 20) est incorporé au moins en partie dans le carter en spirale (2), et **en ce que** le dispositif d'injection (4) comprend au moins une ouverture (6) vers le canal d'écoulement (12) afin que de l'air de l'extérieur de l'ensemble de compresseur (1) puisse être introduit par le dispositif d'injection (4) dans le canal d'écoulement (12).

3. Turbocompresseur selon la revendication 1, **caractérisé en ce que** le dispositif d'injection (4) comprend un canal de fluide (13).

4. Turbocompresseur selon la revendication 1, **caractérisé en ce que** le dispositif d'injection (4, 20) est fixé à une paroi extérieure (7) du carter en spirale (2) afin que de l'air de l'extérieur de l'ensemble de compresseur (1) puisse être introduit dans le canal d'écoulement (12) en passant par le dispositif d'injection (4) à travers une ouverture (6) dans le carter en spirale (2).

5. Turbocompresseur selon la revendication 4, **caractérisé en ce que** la paroi extérieure (7) du carter en spirale (2), à laquelle est fixé le dispositif d'injection (4), fait partie d'une paroi extérieure (8) du diffuseur conique (5).

6. Turbocompresseur selon la revendication 1, **caractérisé en ce que** la bride de sortie de compresseur (11) entoure au moins en partie le dispositif d'injection (4, 20) afin que de l'air de l'extérieur de l'ensemble de compresseur (1) puisse être introduit par le dispositif d'injection dans le canal d'écoulement (12) du carter en spirale (2).

7. Turbocompresseur selon la revendication 6, **caractérisé en ce que** le dispositif d'injection (20) comprend un canal de fluide (23) dans la bride de sortie de compresseur (11), le canal de fluide (23) comprenant une première ouverture (24) et une deuxième ouverture (25), dans lequel de l'air de l'extérieur de l'ensemble de compresseur (1) peut être introduit dans le canal de fluide (23) par l'intermédiaire de la première ouverture (24) du canal de fluide (23), et dans lequel la deuxième ouverture (25) du canal de fluide (23) relie en communication fluidique le canal de fluide (23) au canal d'écoulement (12) du carter en spirale (2) afin que l'air puisse être introduit dans le canal d'écoulement (12).

8. Turbocompresseur selon la revendication 7, **caractérisé en ce qu'**un tronçon du canal de fluide (23) est formé par une pièce de raccordement (18) qui peut être reliée à la bride de sortie de compresseur (16).

9. Turbocompresseur selon l'une quelconque des revendications précédentes, **caractérisé en ce que** le dispositif d'injection (4, 20) présente un réservoir (19) pour stocker l'air et pour la distribution homogène de l'air sur la circonférence du canal d'écoulement (12), le réservoir (19) comprenant une partie du canal de fluide (13, 23).

10. Turbocompresseur selon l'une quelconque des revendications précédentes, **caractérisé en ce que** le dispositif d'injection (4, 20) comprend un élément de raccordement (14) pour que de l'air de l'extérieur de l'ensemble de compresseur (1) puisse être introduit dans le dispositif d'injection (4) par l'intermédiaire d'un élément d'injection pouvant être inséré dans l'élément de raccordement (14) et réalisé sous forme de buse.

11. Turbocompresseur selon l'une quelconque des revendications précédentes, **caractérisé en ce que** le dispositif d'injection (4, 20) est réalisé en forme de buse.
